# EUROPÄISCHE PATENTSCHRIFT

(11) **EP 0 403 955 B1**
(45) Veröffentlichungstag und Bekanntmachung des Hinweises auf die Patenterteilung: **13.12.1995**
(21) Anmeldenummer: 90111217.7
(22) Anmeldetag: 13.06.1990
(51) Int. Cl.: G21C 3/18, G21C 3/07

(54) **Verfahren zum Abbau des Plutoniumgehaltes im Kernbrennstoff und Kernbrennstoffelement für einen Kernreaktor**
Method of reducing the content of plutonium in nuclear fuel and nuclear fuel element for nuclear reactor
Procédé pour réduire la teneur en plutonium d'un combustible nucléaire et élément de combustible pour réacteur nucléaire

(30) Priorität: 19.06.1989 EP 89111124
(43) Veröffentlichungstag der Anmeldung: 27.12.1990
(73) Patentinhaber: SIEMENS AKTIENGESELLSCHAFT, 80333 München (DE)
(72) Erfinder: Peehs, Martin, Dr., D-8526 Bubenreuth (DE); Schlosser, Gerhard, Dr., D-8520 Erlangen (DE); Porsch, Dieter, Dipl.-Ing., D-8510 Fürth (DE)

(56) Entgegenhaltungen:
- EP-A- 370 884
- EP-A- 0 132 911
- EP-A- 0 235 954
- DE-B- 1 279 230
- GB-A- 1 046 965
- US-A- 3 243 350
- PATENT ABSTRACTS OF JAPAN, Band 13, Nr. 537 (P-968)[3885], 30. November 1989 & JP-A-1 221 698

## Beschreibung

Die Erfindung betrifft ein Verfahren zum raschen Abbau des Plutoniumgehaltes in wiederaufbereitetem Kernbrennstoff nach dem Oberbegriff des Patentanspruches 1 sowie ein Kernbrennstoffelement für einen Kernreaktor nach dem Oberbegriff des Patentanspruches 7.

Aus FR-A-2 081 762 ist ein Hüllkörper, insbesondere ein Hüllrohr für ein Kernbrennstoffelement bekannt, das in erster Linie für einen schnellen Brutreaktor bestimmt ist. In diesem Hüllrohr kann sich unter anderem auch Plutonium als Kernbrennstoff befinden. Das Hüllrohr selbst besteht aus einer Vanadiumlegierung mit 40 bis 99,7 Gew.-% Vanadium, die zum Erzielen einer großen Kriechfestigkeit als Legierungsbestandteile unter anderem bis zu 2 Gew.-% Zirkonium oder Hafnium enthalten kann. Das Hüllrohr kann ferner zum Vermeiden von Korrosion an der Oberfläche Bestandteile aufweisen, zu denen unter anderem auch Hafnium in ganz geringer Menge gehören kann. Dieses Hafnium soll Kohlenstoff-, Stickstoff- und Sauerstoffverunreinigungen im Hüllrohr in eine inaktive Form bringen.

Ein als Brennstab ausgebildetes Kernbrennstoffelement kann mit anderen Brennstäben in einem Skelett zu einem Brennstabbündel zusammengefaßt sein und in einem Leichtwasser-Kernreaktor durch Kernspaltung Energie abgeben. Diese Brennstabbündel werden in einem Druckwasserkernreaktor durch das im flüssigen Zustand befindliche, zugleich Moderatorsubstanz darstellende Leichtwasser gekühlt, in einem Siedewasserkernreaktor wird die Ausbildung von Wasserdampf zugelassen.

In einem solchen Leichtwasser-Kernreaktor unterliegt der plutoniumhaltige Kernbrennstoff einer Neutronenstrahlung. Hierbei werden die Kerne insbesondere von Plutonium 239 und 241 gespalten. Durch die Neutronenstrahlung wird aber auch im plutoniumhaltigen Kernbrennstoff enthaltenes U-238 in Plutonium umgewandelt. Deshalb erfordert der Abbau des Plutoniums, das beim Wiederaufbereiten abgebrannter Kernbrennstoffelemente an fällt und wieder als Kernbrennstoff in frischen Kernbrennstoffelementen verwendet wird, eine verhältnismäßig lange Zeit.

Der Erfindung liegt die Aufgabe zugrunde, diesen Abbau von Plutonium zu beschleunigen.

Zur Lösung dieser Aufgabe haben ein Verfahren und ein Kernbrennstoffelement der eingangs erwähnten Art erfindungsgemäß die Merkmale des kennzeichnenden Teiles des Patentanspruches 1 bzw. 7.

Hafnium hat die Eigenschaft, in Neutronenstrahlung Hafniumisotope zu bilden, die schwerer sind und einen kleineren Neutroneneinfangsquerschnitt haben als die ursprünglichen Hafniumisotope. Dadurch ist es in der Lage, U-238 im plutoniumhaltigen Kernbrennstoff hinsichtlich dessen Absorptionswirkung auf Neutronen zu ersetzen. Deshalb kann der Gehalt an U-238 im plutoniumhaltigen Kernbrennstoff verhältnismäßig gering gehalten und sogar ganz vermieden werden, ohne daß die Reaktivität und die Wärmeleistung im Kernreaktor unzulässig hoch werden, wenn nur Hafnium in ausreichend hoher Menge vorhanden ist.

Hafnium und seine Isotope sind metallisch und können daher auch sehr leicht in relativ hoher Konzentration, z.B. als Legierungsbestandteil, in das Metall des Hüllrohres eines Brennstabes eingebracht werden.

Günstig ist eine Weiterbildung entsprechend Patentanspruch 11. Sie ermöglicht, daß z.B. ein dickwandiges Hüllrohr eines Brennstabes mit kleinem Innendurchmesser und entsprechend geringem Volumen für Kernbrennstoff hohe Plutoniummengen aufnehmen kann.

Aus GB-A-1 046 965 ist zwar plutoniumhaltiger keramischer Kernbrennstoff bekannt, der Hafnium als abbrennbares Neutronengift ebenfalls in keramischer Form enthält, das Einbringen des Hafniums in den plutoniumhaltigen Kernbrennstoff kann jedoch im Gegensatz zum Einbringen des Hafniums in den Werkstoff des ursprünglich nicht radioaktiven Hüllkörpers nur unter aufwendigen Schutzmaßnahmen durchgeführt werden. Die in diesem Dokument erwähnten Kernbrennstoffe enthalten erheblichen Mengen von U-238.

Aus DE-B-1 279 230 ist zwar Bor als abbrennbares Neutronengift und Legierungsbestandteil im metallischen Hüllrohr von Brennstäben bekannt, in Neutronenstrahlung versprödet Bor aber nicht nur den Werkstoff des Hüllrohres, sondern brennt auch sehr schnell ab und steht deshalb nicht ausreichend lange zur Kompensation von Reaktivität zur Verfügung. Daher muß der Kernbrennstoff im Hüllrohr erhebliche Mengen von z.B. U-238 enthalten.

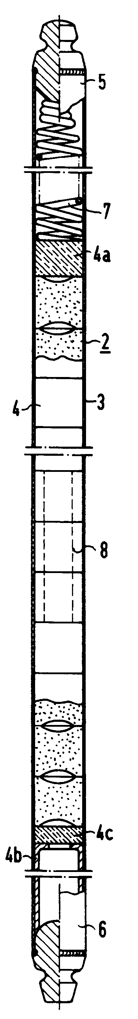

Die Erfindung und ihre Vorteile seien anhand der Zeichnung an einem Ausführungsbeispiel näher erläutert:

In der Zeichnung ist teilweise im Längsschnitt ein Brennstab 2 dargestellt, der ein Hüllrohr 3 aus einer Zirkonium-Hafnium-Legierung aufweist.

Innerhalb dieses Hüllrohres 3 befindet sich eine Säule aus keramischen Kernbrennstofftabletten 4, die aus Plutoniumdioxid bestehen und zylindrisch sind. An beiden Enden ist das Hüllrohr 3 mit Stopfen 5 und 6 aus einer Zirkoniumlegierung gasdicht verschlossen. Am Stopfen 5 befindet sich im Hüllrohr 3 noch eine als Druckfeder ausgebildete Schraubenfeder 7, die sich am Stopfen 5 und über einen Stützkörper 4a aus Aluminiumoxid an der Säule aus Kernbrennstofftabletten 4 abstützt. Am anderen Stopfen 6 liegt innerhalb des Hüllrohres 3 ein Becher 4b aus Stahl an, auf dessen mit einer Öffnung versehenem Boden sich außen die Säule aus keramischen Kernbrennstofftabletten 4 über einen weiteren Stützkörper 4c aus Aluminiumoxid abstützt.

Die Wandstärke des Hüllrohres 3 aus der Zirkonium-Hafnium-Legierung beträgt 2.9 mm, der Durchmesser der Kernbrennstofftabletten 4 ist 5 mm. Der Hafniumgehalt in der Zirkonium-Hafnium-Legierung des Hüllrohres 3 beträgt 7 Gew.-%.

Dieser Brennstab 2 gibt in einem Leichtwasserkernreaktor mindestens doppelt solange etwa die gleiche Leistung ab wie ein Brennstab mit gleichem Außendurchmesser des Hüllrohres, das aus einer Zirkoniumlegierung ohne Hafnium besteht und das mit Kernbrennstofftabletten gefüllt ist, die einen Durchmesser von 9 mm haben und aus keramischem Urandioxid mit U-238 und leichter Anreicherung an U-235 sowie gegebenenfalls mit einem Zusatz aus Plutoniumdioxid bestehen. Während sich aber im letztgenannten Brennstab in der Neutronenstrahlung im Kernreaktor aus U-238 neu Plutonium bildet, entfällt im Brennstab 2 eine solche Neubildung von Plutonium gänzlich. Trotzdem kompensiert das Hafnium über ausreichend lange Zeit Reaktivität im Leichtwasserkernreaktor. Der Brennstab 2 ist ferner im abgebrannten Zustand ohne Aufarbeitung endlagerfähig. Auch ist ein Hüllrohr aus einer hafniumhaltigen Zirkoniumlegierung besonders korrosionsfest.

Innerhalb des Hüllrohres 3 des Brennstabes 2 kann sich noch als Zusatzkörper, der kein Bestandteil des Hüllkörpers bzw. des Hüllrohres 3 ist, eine Hülse 8 aus Hafnium befinden, die in der Zeichnung nur gestrichelt angedeutet ist und in der Kernbrennstofftabletten aus Plutoniumdioxid mit angepaßtem Durchmesser angeordnet sind.

## Patentansprüche

1. Verfahren zum raschen Abbau des Plutoniumgehaltes in wiederaufbereitetem Kernbrennstoff, wobei der wiederaufbereitete Kernbrennstoff in Kernbrennstoffelemente eingefüllt und in Kernreaktoren abgebrannt wird,
**dadurch gekennzeichnet,**
daß der plutoniumhaltige Brennstoff mit einem derart begrenzten oder praktisch verschwindenden Gehalt an U-238 in Brennelemente mit einem derartigen Gehalt an Hafnium eingefüllt wird, daß beim Reaktorbetrieb die durch den Plutoniumgehalt hervorgerufene Reaktivität und Wärmeleistung des Brennelements durch das Hafnium begrenzt sind, ohne daß im Vergleich zum abbrennenden Plutonium wesentliche Mengen von Plutonium durch Neutronenabsorption aus U-238 neu gebildet werden.

2. Verfahren nach Anspruch 1,
**dadurch gekennzeichnet,**
daß die Kernbrennstoffelemente in Leichtwasser-Kernreaktoren eingesetzt werden.

3. Verfahren nach Anspruch 1 oder 2,
**dadurch gekennzeichnet**,
daß als wiederaufbereiteter Kernbrennstoff im wesentlichen Plutoniumoxid verwendet wird.

4. Verfahren nach einem der Ansprüche 1 bis 3,
**dadurch gekennzeichnet**,
daß der wiederaufbereitete Kernbrennstoff in Brennstäbe mit einem metallischen Hüllrohr eingefüllt wird, dessen Werkstoff mindestens stellenweise eine wenigstens annahernd gleichmaßig verteilte Hafniumkonzentration größer als 2 Gew.-%, bevorzugt größer als 5 Gew.-% aufweist.

5. Verfahren nach einem der Ansprüche 1 bis 4,
**dadurch gekennzeichnet**,
daß der wiederaufbereitete Brennstoff in Hüllrohre von Brennstäben eingefüllt wird, in deren Inneren sich Zusatzkörper aus Hafnium haltigen Metall befinden.

6. Verfahren nach einem der Ansprüche 1 bis 5,
**dadurch gekennzeichnet,**
daß der wiederaufbereitete Brennstoff nach seinem Abbrennen aus dem Reaktor entnommen und ohne weitere Wiederaufbereitung endgelagert wird.

7. Kernbrennstoffelement für einen Kernreaktor, mit Hafnium und einem plutoniumhaltigen Kernbrennstoff, der in einem Hüllkörper angeordnet ist, insbesondere Plutonium und Hafnium enthaltender Brennstab mit einem metallischen Hüllrohr,
**dadurch gekennzeichnet**,
daß der Gehalt des Brennstoffs an U-238 zugunsten des Hafniums auf solche Werte begrenzt ist, daß beim Reaktorbetrieb die durch den Plutoniumgehalt hervorgerufene Radioaktivität und Wärmeleistung des Brennelements durch das Hafnium begrenzt sind, ohne daß im Vergleich zum abbrennenden Plutonium wesentliche Mengen von Plutonium durch Neutronenabsorption aus U-238 neu gebildet werden.

8. Kernbrennstoffelement nach Anspruch 7,
**dadurch gekennzeichnet,**
daß der Werkstoff des Hüllkörpers zumindest stellenweise eine wenigstens annähernd gleichmäßig verteilte Hafniumkonzentration größer als 2 Gew.-%, bevorzugt größer als 3 Gew.-%, insbesondere größer als 5 Gew.-%, aufweist.

9. Kernbrennstoffelement nach Anspruch 8,
**dadurch gekennzeichnet,**
daß die wenigstens annähernd gleichmäßig verteilte Hafniumkonzentration größer als 10 Gew.-%, bevorzugt größer als 20 Gew.-%, insbesondere größer als 30 Gew.-%, ist.

10. Kernbrennstoffelement nach Anspruch 9,
**dadurch gekennzeichnet**,
daß die wenigstens annähernd gleichmäßig verteilte Hafniumkonzentration größer als 40 Gew.-% ist.

11. Kernbrennstoffelement nach einem der Ansprüche 7 bis 10,
**dadurch gekennzeichnet,**
daß der Hüllkörper, vorzugsweise das Hüllrohr (3) eines Brennstabes (2), eine hafniumhaltige oder aus Hafnium bestehende Oberflächenschicht auf der Innen-und/oder Außenseite aufweist.

12. Kernbrennstoffelement nach einem der Ansprüche 7 bis 10,
**dadurch gekennzeichnet,**
daß der Hüllkörper aus einer Zirkonium-Hafnium-Legierung besteht.

13. Kernbrennstoffelement nach Anspruch 12,
**dadurch gekennzeichnet,**
daß der Hafniumgehalt in der Zirkonium-Hafnium-Legierung etwa 7 Gew.-% beträgt.

14. Kernbrennstoffelement nach einem der Ansprüche 7 bis 13,
**dadurch gekennzeichnet,**
daß innerhalb des Hüllkörpers ein kein Plutonium enthaltender, Hafnium aufweisender Zusatzkörper angeordnet ist.

15. Kernbrennstoffelement nach Anspruch 14,
**dadurch gekennzeichnet,** daß sich innerhalb des Hüllkörpers, vorzugsweise des Hüllrohres (3) eines Brennstabes (2), ein Zusatzkörper aus hafniumhaltigem Metall,vorzugsweise eine Hülse (8), befindet.

16. Kernbrennstoffelement nach Anspruch 14 oder 15,
**dadurch gekennzeichnet,** daß der Zusatzkörper aus Hafnium ist.

17. Kernbrennstoffelement nach Anspruch 7, dadurch gekennzeichnet, daß das Kernbrennstoffelement ein Nachlade-Brennstab ist, der einen kleineren Durchmesser und eine dickere Hüllrohr-Wandstärke als die Original-Brennstäbe aufweist, und dessen Brennstofftabletten praktisch kein U-238 enthalten.

## Claims

1. Method for quickly reducing the plutonium content in reprocessed nuclear fuel, wherein the reprocessed nuclear fuel is put into nuclear fuel elements and burnt off in nuclear reactors, characterised in that the plutonium-containing fuel, having such a limited or practically imperceptible content of U-238, is put into fuel elements having such a content of hafnium that during the reactor operation, the reactivity and thermal output of the fuel element that are caused by the plutonium content are limited by the hafnium, without substantial quantities of plutonium, which quantities are substantial in comparison with the plutonium which is burnt off, being newly formed from U-238 by neutron absorption.

2. Method according to claim 1, characterised in that the nuclear fuel elements are used in light-water nuclear reactors.

3. Method according to claim 1 or 2,
characterised in that plutonium oxide is substantially used as the reprocessed nuclear fuel.

4. Method according to one of the claims 1 to 3,
characterised in that the reprocessed nuclear fuel is put into fuel rods having a metallic cladding tube, the material of which has at least in places an at least substantially evenly distributed hafnium concentration which is greater than 2% by weight, preferably greater than 5% by weight.

5. Method according to one of the claims 1 to 4,
characterised in that the reprocessed fuel is put into cladding tubes of fuel rods, in the interior of which there are additional bodies made of hafnium-containing metal.

6. Method according to one of the claims 1 to 5,
characterised in that after the reprocessed fuel has been burnt off, it is removed from the reactor and put into ultimate storage without further reprocessing.

7. Nuclear fuel element for a nuclear reactor, with hafnium and a plutonium-containing nuclear fuel, which is arranged in a cladding body, in particular a fuel rod containing plutonium and hafnium and having a metallic cladding tube, characterised in that the U-238 content of the fuel is limited in favour of the hafnium to such values that during the reactor operation, the radioactivity and thermal output of the fuel element that are caused by the plutonium content are limited by the hafnium, without substantial quantities of plutonium, which quantities are substantial in comparison with the plutonium which is burnt off, being newly formed from U-238 by neutron absorption.

8. Nuclear fuel element according to claim 7,
characterised in that the material of the cladding body has at least in places an at least substantially evenly distributed hafnium concentration which is greater than 2% by weight, preferably greater than 3% by weight, in particular greater than 5% by weight.

9. Nuclear fuel element according to claim 8,
characterised in that the at least substantially evenly distributed hafnium concentration is greater than 10% by weight, preferably greater than 20% by weight, in particular greater than 30% by weight.

10. Nuclear fuel element according to claim 9,
characterised in that the at least substantially evenly distributed hafnium concentration is greater than 40% by weight.

11. Nuclear fuel element according to one of the claims 7 to 10, characterised in that the cladding body, preferably the cladding tube (3) of a fuel rod (2) has on the inside and/or on the outside, a surface layer that contains hafnium or consists of hafnium.

12. Nuclear fuel element according to one of the claims 7 to 10, characterised in that the cladding body consists of a zirconium-hafnium alloy.

13. Nuclear fuel element according to claim 12,
characterised in that the hafnium content in the zirconium-hafnium alloy amounts to approximately 7% by weight.

14. Nuclear fuel element according to one of the claims 7 to 13, characterised in that arranged inside the cladding body there is an additional body which contains hafnium and no plutonium.

15. Nuclear fuel element according to claim 14,
characterised in that inside the cladding body, preferably inside the cladding tube (3) of a fuel rod (2), there is an additional body of hafnium-containing metal, preferably a sleeve (8).

16. Nuclear fuel element according to claim 14 or 15, characterised in that the additional body consists of hafnium.

17. Nuclear fuel element according to claim 7,
characterised in that the nuclear fuel element is a re-loading fuel rod, which has a smaller diameter and a thicker cladding-tube wall-thickness than the original fuel rods, and the fuel pellets of which re-loading fuel rod contain practically no U-238.

## Revendications

1. Procédé de réduction rapide de la teneur en plutonium du combustible nucléaire retraité, le combustible nucléaire retraité étant chargé dans des éléments de combustible nucléaire et consommé dans des réacteurs nucléaires,
caractérisé en ce qu'il consiste
à charger le combustible nucléaire contenant du plutonium et ayant une teneur en U-238 limitée ou disparaissant pratiquement dans des éléments combustibles ayant une teneur en hafnium telle que, lors du fonctionnement du réacteur, la réactivité provoquée par la teneur en plutonium et la puissance calorifique de l'élément combustible soient limitées par l'hafnium sans que, en comparaison du plutonium consommé, des quantités sensibles de plutonium soient reformées par l'absorption de neutrons provenant de U-238.

2. Procédé suivant la revendication 1,
caractérisé en ce qu'il consiste
à monter les éléments combustibles nucléaires dans des réacteurs nucléaires à eau légère.

3. Procédé suivant la revendication 1 ou 2,
caractérisé en ce qu'il consiste
à utiliser comme combustible nucléaire retraité essentiellement de l'oxyde de plutonium.

4. Procédé suivant l'une des revendications 1 à 3,
caractérisé en ce qu'il consiste
à charger le combustible nucléaire retraité dans des crayons combustibles ayant une gaine métallique dont le matériau présente par endroits une concentration d'hafnium réparti au moins à peu près uniformément supérieure à 2 % en poids et de préférence supérieure à 5 % en poids.

5. Procédé suivant l'une des revendications 1 à 4,
caractérisé en ce qu'il consiste
à charger le combustible retraité dans des gaines de crayons combustibles à l'intérieur desquels se trouvent des corps supplémentaire en métal contenant de l'hafnium.

6. Procédé suivant l'une des revendications 1 à 5,
caractérisé en ce qu'il consiste
à enlever le combustible retraité du réacteur après sa consommation et à le stocker définitivement sans autre retraitement.

7. Elément combustible nucléaire pour un réacteur nucléaire ayant de l'hafnium et un combustible nucléaire contenant du plutonium qui est disposé dans une gaine, notamment crayon combustible contenant du plutonium et de l'hafnium ayant une gaine métallique,
caractérisé en ce que
la teneur du combustible en U-238 est limitée au profit de l'hafnium à des valeurs telles que, lors du fonctionnement du réacteur, la radioactivité provoquée par la teneur en plutonium et la puissance calorifique de l'élément combustible sont limitées par l'hafnium sans que, par rapport au plutonium consommé, il se reforme des quantités sensibles de plutonium par absorption de neutrons provenant de U-238.

8. Elément combustible nucléaire suivant la revendication 7,
caractérisé en ce que
le matériau de la gaine a au moins par endroits une concentration d'hafnium réparti au moins à peu près uniformément supérieure à 2 % en poids, de préférence supérieure à 3% en poids et notamment supérieure à 5 % en poids.

9. Elément combustible nucléaire suivant la revendication 8,
caractérisé en ce que
la concentration d'hafnium réparti au moins à peu près uniformément est supérieure à 10 % en poids, de préférence supérieure à 20 % en poids, notamment supérieure à 30 en poids.

10. Elément combustible nucléaire suivant la revendication 9,
caractérisé en ce que
la concentration d'hafnium réparti au moins à peu près uniformément est supérieure à 40 % en poids.

11. Elément combustible nucléaire suivant l'une des revendications 7 à 10,
caractérisé en ce que
la gaine, de préférence la gaine (3) d'un crayon (2) combustible a du côté intérieur et/ou du côté extérieur une couche superficielle contenant de l'hafnium ou en hafnium.

12. Elément combustible nucléaire suivant l'une des revendications 7 à 10,
caractérisé en ce que
la gaine est en un alliage de zirconium et d'hafnium.

13. Elément combustible nucléaire suivant la revendication 12,
caractérisé en ce que
la teneur en hafnium de l'alliage de zirconium et de l'hafnium est d'environ 7 % en poids.

14. Elément combustible nucléaire suivant l'une des revendications 7 à 13,
caractérisé en ce que à l'intérieur de la gaine est disposé un corps supplémentaire ne contenant pas de plutonium et comportant de l'hafnium.

15. Elément combustible nucléaire suivant la revendication 14,
caractérisé en ce que à l'intérieur de la gaine, de préférence du tube de gainage (3) d'un crayon (2) combustible, se trouve un corps supplémentaire en métal contenant de l'hafnium, de préférence une douille (8).

16. Elément combustible nucléaire suivant la revendication 14 ou 15,
caractérisé en ce que
le corps supplémentaire est en hafnium.

17. Elément combustible nucléaire suivant la revendication 7,
caractérisé en ce que
l'élément combustible nucléaire est un crayon combustible de recharge qui a un diamètre plus petit et une épaisseur de paroi de la gaine plus grande que les crayons combustibles d'origine, et dont les comprimés de combustible ne contiennent pratiquement pas de U-238.
